# FASCICULE DE BREVET EUROPEEN

(11) **EP 3 247 076 B1**
(45) Date de publication et mention de la délivrance du brevet: **04.03.2020**
(21) Numéro de dépôt: 17171552.7
(22) Date de dépôt: 17.05.2017
(51) Int. Cl.: H04L 12/715, H04L 12/805, H04L 12/811, H04W 4/06, H04L 12/761

(54) **SYSTEME ET PROCEDE DE TRANSMISSION DE DONNEES**
DATENÜBERTRAGUNGSSYSTEM UND -VERFAHREN
SYSTEM AND METHOD FOR TRANSMITTING DATA.

(30) Priorité: 20.05.2016 FR 1600810
(43) Date de publication de la demande: 22.11.2017
(73) Titulaire: THALES, 92400 Courbevoie (FR)
(72) Inventeur: BOUYSSOUNOUSE, Guy, 92622 Gennevilliers Cedex (FR); PEREZ, Frédéric, 92622 Gennevilliers Cedex (FR); DELATTRE, Michel, 92622 Gennevilliers Cedex (FR)
(74) Mandataire: Dudouit, Isabelle

(56) Documents cités:
- WO-A1-2011/043755
- WO-A1-2016/022982
- US-A1- 2010 094 963

## Description

L'invention concerne un procédé et un système de transmission de données dans un système de communication pouvant comporter des réseaux de nature différentes.

Dans la suite de la description l'expression « réseau hétérogène » désigne un réseau dans lequel les éléments de transmission peuvent être des postes radio, des satellites, etc.

Dans certaines applications de télécommunication, la transmission de messages se fait à plusieurs destinataires via des réseaux hétérogènes (radio, satellites, etc.) en s'adaptant aux conditions de terrain (obstacles, propagation, mouvements des nœuds du réseau) et en permettant une fourniture de service robuste et globalement efficace. On entend par efficacité globale, un bon rapport entre le volume d'information correctement transmis et les ressources spectrales consommées. Cela se traduit notamment par :
- l'exploitation des capacités diffusantes du média,
- la minimisation des informations de contrôle (surcoût ou « overhead » et échanges protocolaires).

La transmission de données doit également montrer son efficacité en tenant compte notamment des contraintes listées ci-dessous :
- les fluctuations des conditions de transmission sont souvent bien plus rapides que les délais de transmission d'un message, messages de taille importante, bande passante réduite. L'efficacité globale est donc également conditionnée par le surcoût de prise en compte de ces changements et ce, même pour les messages déjà partiellement transmis ;
- un message doit être remis dans un délai imparti et ce, quel que soit le destinataire du message. Si atteindre certains destinataires ne permet pas de tenir ce délai, par exemple suite à des conditions de transmission dégradées, cela ne doit pas avoir d'impact ou peu d'impact sur la remise aux destinataires pour lesquels les conditions de transmission sont nominales.

Le protocole NORM connu de l'homme du métier (en anglo-saxon « Nack-oriented reliable multicast »), RFC 5740, est utilisé pour la transmission de données point à multipoint. Ce protocole NORM adapte le volume d'informations à transmettre ou à retransmettre en fonction du retour (feedback) des récepteurs, par l'utilisation d'acquittements négatifs.

Le protocole connu sous l'abréviation PGM (Pragmatic Group Multicast) est un protocole de diffusion fiable par multidiffusion (ou multicast en anglo-saxon) d'informations générées automatiquement, en temps réel, entre plusieurs sources et plusieurs récepteurs. Il propose une transmission de données fiabilisée dans un arbre contrôlé par une fenêtre de transmission gérée par l'émetteur. Il s'adresse aux applications insensibles aux pertes, non corrigées par le protocole. En effet, seules les informations détectées par les récepteurs comme étant perdues sont signalées, par acquittement négatif. L'émetteur n'est jamais certain que le récepteur a reçu la totalité du message.

La demande de brevet EP1989822 divulgue une transmission fiabilisée multipoint entre un émetteur et plusieurs destinataires. La fiabilisation de la transmission est réalisée en introduisant un serveur et des communications point à point entre les destinataires en cas de pertes.

D'autres protocoles de transmission de données tels que le codage de réseau ou « Network Coding » ou le codage de réseau aléatoire linéaire connu sous l'abréviation anglo-saxonne RLNC (Random Linear Network Coding) sont aussi connus de l'art antérieur.

Malgré les avantages qu'ils procurent, la plupart des procédés connus de l'art antérieur présentent des inconvénients dans les déploiements de réseaux hétérogènes. Les procédés de l'art antérieur ne minimisent pas les surcoûts liés à la transmission inutile d'information, l'information utile transmise étant déjà en possession du récepteur ou les volumes d'informations de contrôle devenant important par rapport à ceux des informations utiles pour les destinataires.

L'art antérieur n'adresse pas la problématique d'acheminement sur réseaux hétérogènes en multibond.

L'approche « Network Coding » Intra-flux apporte une amélioration sensible de la résilience. L'approche précitée RLNC consiste en la génération aléatoire des facteurs de codage. Néanmoins, cette approche présente les inconvénients suivants :
- La probabilité de génération de séquences linéairement dépendantes est non-nulle, des données redondantes sont alors émis inutilement sur le média, (code non-déterministe),
- La nécessité de transmettre les facteurs de codage de la séquence afin de permettre son décodage, ce qui induit un surcoût de consommation de ressource,
- Les principes de recodage partiel au niveau des relais, basés sur une information partiellement reçue et à ce stade non décodable, ne permettent de ne générer que des séquences linéairement dépendantes de celles déjà émises. Cela augmente la probabilité de trouver, sur la destination, des séquences linéairement dépendantes et donc d'avoir émis de l'information inutile,
- RNLC nécessite l'utilisation d'une signalisation de bout en bout permettant de contrôler la transmission lorsque le destinataire a reçu suffisamment de données pour le décodage.

L'enseignement technique de la demande de brevet WO2016/022982 a notamment pour objectif d'augmenter le débit de données et de diminuer le retard de transmission depuis un nœud source vers un nœud récepteur via un nœud relais. Dans ce document, un nœud source va coder plusieurs paquets de données en utilisant un code fontaine. Sur réception d'une quantité suffisante de paquets de données codées, un nœud relais va recoder les paquets et un nœud récepteur qui a reçu une quantité suffisante de paquets de données va reconstruire le message.

La présente invention propose un procédé et un système de communication pour échanger des messages au sein d'un groupe via des réseaux diffusant basés notamment sur :
- Un acheminement de messages bond par bond sur un ensemble de média connexe et diffusant en utilisant des directives de routage associées au message,
- Une méthode de codage de message indépendante des médias et utilisée à chaque « relayage » du message,
- Une transmission optimale sur chaque média en découpant le message en segment de taille adaptée aux caractéristiques du média (temps de transmission, taux d'erreurs,...),
- Un critère d'arrêt de la diffusion du message, permettant de minimiser les informations transmises inutilement sur chaque média diffusant.

Dans la suite de la description, on fera appel aux définitions suivantes :
- Le mot « groupe » désigne la source d'un message et l'ensemble de destinataires de ce message, un destinataire pouvant être une application informatique s'exécutant sur un terminal ou un serveur raccordé au réseau hétérogène par l'intermédiaire de nœuds de transmission,
- Le mot « groupe de nœuds » désigne l'ensemble des nœuds source et destinataires auxquels est rattaché le groupe,
- Le mot « nœud relais » désigne un nœud de transmission pouvant recevoir les informations d'un sous-réseau et les relayer sur un autre sous-réseau, le nœud relais peut être un des nœuds du groupe mais aussi tout autre nœud rattaché au média diffusant,
- L'expression « média diffusant » ou « sous-réseau diffusant » désigne un sous-réseau dans lequel chaque nœud raccordé peut recevoir une information émise par l'un des nœuds sans qu'il y ait un processus de n-plication de l'information,
- Le mot « cellule » représente un fragment codé d'informations de taille fixe d'un message,
- Le mot « index » désigne un entier positif qui représente le numéro d'ordre d'une cellule produite par un code fontaine ; il permet de référencer cette cellule codée lors de la reconstitution d'un message,
- Le mot « segment » représente un fragment codé de taille variable d'un message, il est constitué par une concaténation de cellules,
- L'expression « code fontaine » est définie plus loin dans la description,
- L'expression « hypothèse d'une réception nominale » dans un sous-réseau sous-entend que toute information émise sur le sous-réseau est reçue par tous les nœuds du sous-réseau concernés par la transmission, nœuds relais et nœuds destinataires.

Le procédé met en œuvre un mécanisme de relayage par tous les nœuds, sur tous les réseaux et sous-réseaux connectés et définis par la directive de routage :
- Dès réception d'un nombre de cellules « n » ayant un index différent, quel qu'en soit l'émetteur, permettant de reconstituer le message.
- Jusqu'à ce que, sur chacun des sous réseaux, un nombre prédéfini de cellules d'index différent ait été émis ou reçu.
Le relayage consiste notamment à décoder le message reçu et à le recoder par une séquence du code fontaine unique à chaque émission du même message quel que soit le nœud relais et sous réseau désigné par la directive de routage.
Ce mécanisme de relayage peut être amélioré, au cas par cas, par type de message ou par type de sous-réseau traversé, en pilotant la transmission des émetteurs (nœuds relais ou nœud source) par une information de contrôle allant des nœuds récepteurs (nœuds relais ou nœuds destinataires) aux nœuds émetteurs directement atteignables par un sous-réseau. Cette information de contrôle permettra de mieux réguler la charge et de gérer des situations de taux d'erreurs élevés. Cette amélioration peut être mise en œuvre lorsque la directive de routage du message contraint les chemins possibles à un petit nombre de nœuds relais, les nœuds récepteurs relais jouent alors un rôle déterminant dans la régulation de charge et la détection des erreurs.

L'invention concerne un procédé pour transmettre un message M émis par un nœud source vers au moins un nœud destinataire au sein d'un groupe de nœuds raccordés chacun à un ou plusieurs sous-réseaux diffusants, lesdits nœuds communiquant via un protocole de routage et au moins un nœud relais étant configuré pour recevoir les informations d'un sous-réseau et les relayer vers un autre sous-réseau, un message étant constitué de n cellules et comprenant plusieurs cellules et des informations propres au routage, le procédé comportant en combinaison au moins les étapes suivantes:
Au niveau du nœud source
   - Choix d'un codage des cellules du message M et des informations propres au routage, par le nœud source en utilisant un code fontaine adapté à générer n+k cellules, afin de constituer p plages de x cellules, avec x supérieur ou égal à n, une cellule étant repérée par un index dans le message,
   - En fonction de directives de routage et de son identifiant IDn, le nœud source détermine les plages de x cellules à utiliser pour coder le message avant l'émission vers le ou les nœuds relais ou vers le ou les nœuds destinataires,
   - le nœud source regroupe les cellules à transmettre en plusieurs segments, un segment comporte un nombre Ns de cellules codées et le nœud source insère avant chaque segment un en-tête comprenant au moins les informations suivantes : une information permettant de déduire l'index de chaque cellule contenue dans le segment, un identifiant propre au message à transmettre et sa taille,
   - émission d'au moins une première suite de segments {S₁₁(M), ..., S₁ₖ(M)} du message M via un premier chemin de transmission et d'au moins une deuxième suite de segments {S₂₁(M), ..., S₂ₗ(M)} du message M via un deuxième chemin de transmission,
Au niveau d'un nœud relais
   - le nœud relais comptabilise par message M et par sous-réseau SR les cellules d'index différents qu'il émet et qu'il reçoit des autres nœuds du sous-réseau, à partir de l'identifiant message contenu dans l'entête de segment,
   - dès que le nœud relais dispose d'un nombre de cellules d'index différents correspondant à la taille du message M, il reconstruit ce message,
   - en fonction des directives de routage contenues dans le message reconstruit et de son identifiant de nœud IDn, le nœud relais détermine les plages de x cellules à utiliser pour recoder le message avant l'émission vers les autres nœuds relais ou vers les autres nœuds destinataires, et émet sur chaque sous réseau un nombre maximum de cellules en tenant compte des cellules qu'il a déjà reçues sur ce sous réseau,
   - le nœud relais arrête son émission sur le sous réseau SR dès que le nombre de cellules d'index différents reçues et émises sur le sous-réseau permet de reconstituer le message depuis les autres nœuds du sous réseau avec l'hypothèse d'une réception nominale,
   - les nœuds destinataires appartenant au groupe de nœuds raccordés et qui ne sont pas des nœuds relais reconstituent le message à partir de segments reçus des sous-réseaux auxquels ils sont attachés avant de délivrer le message.

Le procédé utilise, par exemple, comme codage des cellules un code algébrique.

Selon une variante, le nombre de cellules est choisi en fonction des caractéristiques du sous-réseau de transmission du message.

Selon une autre variante, le nombre de cellules à transmettre sur un sous réseau correspond au nombre adapté au taux d'erreur du sous-réseau de transmission.

Le procédé utilise, par exemple, une fonction d'allocation de plage de cellules à émettre adaptée à allouer une plage différente à chaque couple (nœud, sous-réseau), les sous réseaux à considérer étant les sous réseaux de la directive de routage.

Le pilotage de la transmission des segments tient compte, par exemple, d'une information d'état de réception délivrée par les récepteurs.

Selon une variante, la transmission des données est réalisée par transmission haute fréquence et/ou très haute fréquence et/ou tout réseau IP.

L'invention concerne aussi un système pour relayer un ou plusieurs messages au sein d'un réseau comprenant plusieurs nœuds communiquant entre eux au moyen d'un média diffusant, et appartenant à un groupe G composé d'un nœud source et de plusieurs nœuds du réseau, un message étant constitué de plusieurs cellules, une cellule étant repérée par un index entier représentant le numéro d'ordre de cette cellule produite par un code fontaine, comportant en combinaison au moins les éléments suivants :
- un nœud source de message M à transmettre sur plusieurs chemins correspondant à au moins deux sous-réseaux, ledit nœud source comprenant au moins un émetteur, un processeur adapté à exécuter au niveau du nœud source les étapes d'un algorithme de codage des données du message M à transmettre,
- un ou plusieurs nœuds relais comprenant chacun, un émetteur, un récepteur, un algorithme de codage/décodage du message M identique à l'algorithme de codage du nœud source, un compteur des cellules contenues dans le message codé émises et reçues par chemin d'acheminement du message M, un processeur adapté à exécuter les étapes du procédé selon l'invention au niveau du nœud relais,
- un nœud destinataire comprenant un récepteur d'un message, un module d'algorithme de décodage permettant de reconstituer le message, un émetteur et un processeur configuré pour reconstituer le message à partir des segments reçus des sous-réseaux auxquels ils sont rattachés, un compteur pour comptabiliser les cellules émises et reçues par chemin d'acheminement du message M.

D'autres caractéristiques et avantages de la présente invention apparaîtront mieux à la lecture de la description qui suit avec des exemples de réalisation donnés à titre illustratif et nullement limitatif annexée des figures qui représentent :
- Figure 1, un exemple de réseau dans lequel le procédé selon l'invention peut être mis en œuvre,
- Figure 2, un schéma de codage d'un message à transmettre,
- Figure 3, un organigramme listant les principales étapes du procédé selon l'invention,
- Figure 4, un premier exemple de topologie de réseau,
- Figures 5, 6, 7 et 8 des exemples chiffrés de la mise en œuvre du procédé selon l'invention dans le réseau de topologie de la figure 4,
- Figure 9, un second exemple de topologie de réseau, et
- Figures 10, 11 des exemples chiffrés de la mise en œuvre du procédé selon l'invention dans le réseau de topologie de la figure 9.

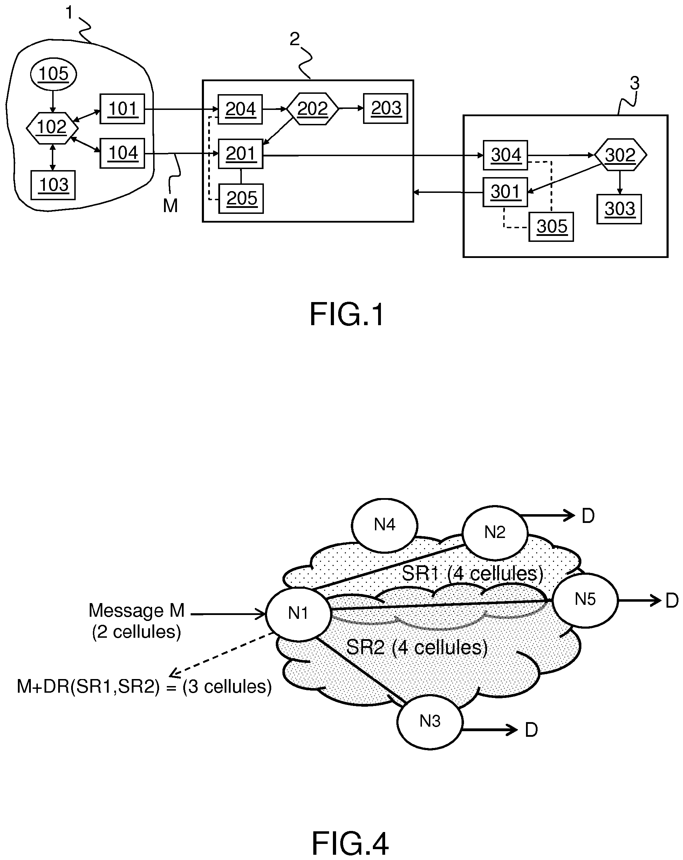

La figure 1 représente un exemple de base dans le cas d'un réseau comprenant une source de message, un nœud relais, deux sous-réseaux pour la transmission du message, un nœud destinataire.

Un sous-réseau peut être un réseau SATCOM, un réseau d'infrastructure sans fil terrestre, un réseau sans fil ad hoc, un groupe multicast IP au-dessus de n'importe quelle technologie.

La source de messages est, par exemple, un nœud du système qui cherche à transmettre un message M vers un ou plusieurs nœuds destinataires appartement à un groupe. L'acheminement du message segmenté se fait sur plusieurs chemins correspondant à des sous-réseaux, au moins deux, bond par bond. Le message est identifié par une référence unique dans le réseau vers un groupe de récepteurs.

Le nœud source 1 comporte, par exemple, un émetteur 101, un processeur 102 adapté à exécuter les étapes du procédé selon l'invention, un module 103 d'algorithme de codage des données à transmettre, éventuellement un récepteur 104, un compteur 105 des cellules émises et reçues par chemin d'acheminement du message M. L'algorithme de codage est basé sur un code fontaine commun à la source et à tous les relais garantissant l'indépendance linéaire de tous les segments résultants.

Le nœud relais 2 comprend par exemple un émetteur 201, un processeur 202, un récepteur 204 adapté à recevoir le message émis par le nœud source, un module d'algorithme de codage, décodage, 203 identique au module 103, un compteur 205 des cellules émises et reçues par chemin d'acheminement du message M. Le nœud relais est associé à deux sous-réseaux qui correspondent à deux chemins de transmission.

Le nœud destinataire 3 comprend par exemple un récepteur 304 du message, un module d'algorithme de décodage 303 permettant de reconstituer le message, un émetteur 301 et un processeur 302 exécutant les étapes du procédé selon l'invention, un compteur 305 pour comptabiliser les cellules émises et reçues par chemin d'acheminement du message M.

Le procédé s'appuyant sur un média diffusant, un nœud d'un sous-réseau est en écoute pour les émissions des autres nœuds d'un sous-réseau et reçoit aussi les cellules émises par les autres nœuds du sous-réseau.

Le procédé selon l'invention met en œuvre un codage algébrique, qui est commun à tous les nœuds émetteurs de message M, par exemple, le nœud source, un nœud relais ou tout autre élément du système comprenant cette fonctionnalité d'émission d'un message.

Dans le codage utilisé, la taille d'une cellule est fixe et correspond à un paramètre de configuration. Un message est constitué d'un nombre de cellules (taille du message = n^{∗}taille de la cellule), les cellules permettant de reconstruire un message. Le code algébrique va générer n+k cellules, k étant choisi très grand (code pseudo-fontaine). Tout autre code présentant des caractéristiques semblables pourrait être utilisé.

Chaque cellule Ci est numérotée par un entier, index de la cellule, allant de 1 à n+k. Dès qu'un nœud reçoit n cellules d'index différent, le message complet peut être reconstitué.

L'ensemble des cellules est structurée en plages de taille x de cellules contiguës, avec x supérieur ou égal à n, ce qui permet d'apporter de la redondance au sein d'une même plage et de couvrir le cas du sous-réseau présentant le plus fort taux d'erreur. Ainsi, la plage p1 comporte, par exemple, les cellules C1,.., Cx, la plage p2 les cellules Cx+1, .., C2x, etc.

Il y a redondance d'informations dès l'émission d'un nombre de cellules supérieur à n cellules, n correspondant au nombre de cellules fixé initialement et au nombre minimal de cellules permettant la reconstitution du message complet. Par exemple, pour un sous-réseau avec un taux d'erreur de 10%, on considère (1, 1^{∗}n) cellules. La redondance d'informations au sein d'une plage a pour vocation de compenser les pertes estimées de cellules lors de la transmission du message sur un sous-réseau.

Une telle structuration permet de garantir qu'une même cellule ne soit jamais émise plusieurs fois, quels que soient l'émetteur et le sous-réseau en attribuant une plage différente de cellule à émettre pour chaque couple (émetteur, sous-réseau) sur le chemin de données.

Le nombre d'émetteurs (la source plus les relais) multiplié par le nombre de sous-réseaux de la directive de routage définit le nombre de plages de cellules et donc de cellules à utiliser.

Quand un nœud source ou un nœud relais doit émettre sur un sous-réseau SR, il sélectionne une plage pi de cellules et détermine le nombre de cellules à émettre dans cette plage pi en fonction notamment des caractéristiques du sous-réseau. Les caractéristiques d'un sous-réseau sont, par exemple, le taux d'erreur du sous-réseau. Par exemple, pour un sous-réseau sans perte, le nombre de cellules à émettre sera le nombre n, pour un sous-réseau avec de très fort taux de pertes, le nombre de cellules à émettre correspondra à la valeur de x, par exemple.

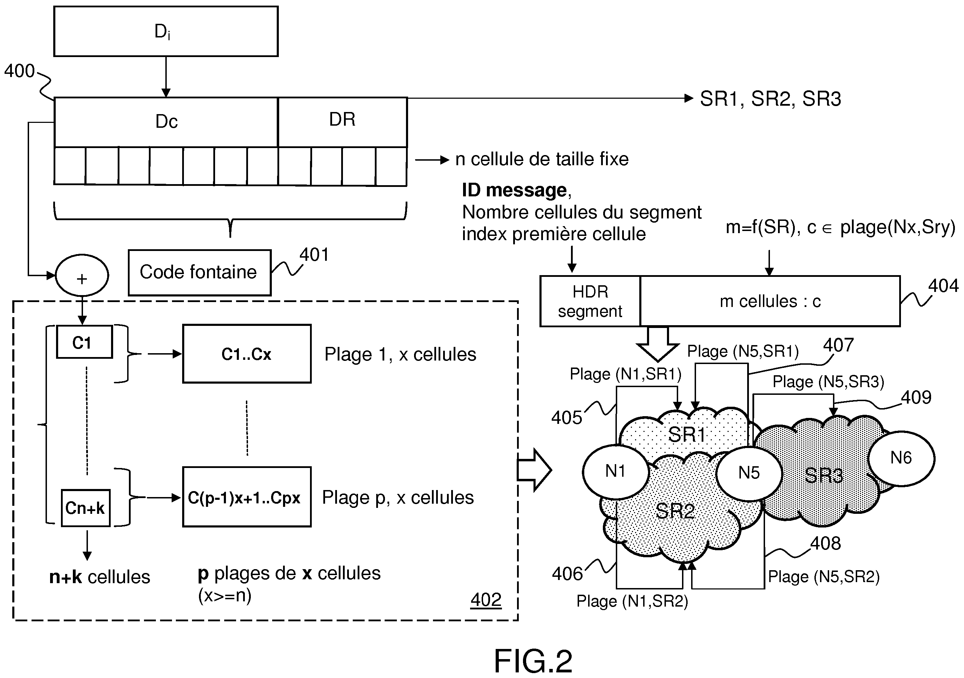

La figure 2 illustre la construction générique d'un message M avec un identifiant ID et sa transmission dans un groupe G auquel appartiennent plusieurs nœuds du réseau dont le nœud source.

Aux données Di du message M sont ajoutées les directives de routage DR, contenant toutes les informations permettant d'atteindre tous les nœuds du groupe G, 400.

A l'ensemble ainsi formé, un code fontaine est appliqué, 401. Le code fontaine comprend n+k cellules, et on va constituer p plages de x cellules avec x supérieur à n afin d'assurer la redondance nécessaire. A l'issue de l'étape de codage, on obtient p plages de x cellules, constituées par exemple de la manière suivante, 402 :
Plage 1, p1, x cellules, C1, ..Cx,
Plage p, x cellules, C(p-1)x+1 ,..., Cpx.

Les données sont par exemple transmises dans des segments S constitués d'un identifiant de segment HDR, de m cellules c, 404. Le nombre de cellules du segment m est fonction du sous-réseau, m=f(SR), les cellules c sont choisies dans une plage différente pour chaque couple (Nx, SRy) avec x l'indice du nœud et y l'indice du sous-réseau.

L'utilisation de plages différentes par nœud émetteur et sous-réseau permet d'optimiser la transmission en garantissant la reconstitution du message dès réception de n cellules, quelque soient les cellules reçues, car tout récepteur reçoit toujours des cellules d'index différents.

Sur la figure 2, le nœud N1 émet des cellules de la plage (N1, SR1) via le sous-réseau SR1, 405 et des cellules de la plage (N1, SR2) 406 via le sous-réseau SR2.

Le nœud N5 émet des cellules de la plage (N5, SR1) via le sous-réseau SR1, 407, et des cellules de la plage (N5, SR2) via le sous-réseau SR2 408, et des cellules de la plage (N5, SR2) via le sous-réseau SR3 des cellules de la plage (N5, SR3) via le sous-réseau SR3, 409.

Avant de donner des exemples chiffrés pour mieux faire comprendre le procédé selon l'invention, le procédé est illustré de manière générique.

Pour l'émission des cellules, le nœud source va, par exemple, regrouper les cellules à transmettre en les groupant par segment S. Un segment comporte un nombre m de cellules codées. Le nœud source insère avant chaque segment S un en-tête comprenant au moins les informations suivantes : le numéro de la première cellule du segment, le nombre de cellules contenues dans le segment, un identifiant propre au message M à transmettre. Le nœud source va ainsi émettre une première suite de segments {S₁₁(M), ..., S₁ₖ(M)} du message M via le premier chemin de transmission et une deuxième suite de segments {S₂₁(M)), ..., S₂ₗ(M)} du message M via le deuxième chemin de transmission. Les plages de cellules à utiliser pour coder le message avant l'émission sont déterminées notamment en fonction des directives de routage.

Le nœud relais reçoit, par exemple, la première suite de segments {S₁₁(M), ..., S₁ₖ(M)} et la deuxième suite de segments {S₂₁(M)), ..., S₂ₗ(M)}. Chacun de ces segments comporte un nombre Ns de cellules codées Cj. Le nœud relais comptabilise par message M et par sous-réseau DR d'acheminement, les cellules qu'il émet et qu'il reçoit (émis par les autres nœuds du sous-réseau). Le nœud comptabilise les cellules associées à un message donné, à partir de l'identifiant message contenu dans un segment. Dès que le nœud relais dispose d'un nombre de cellules égal au nombre de cellules permettant de reconstruire le message M, correspondant à la somme des cellules du message reçues de tous les sous-réseaux, il reconstruit ce message.

En fonction des directives de routage contenues dans le message M reçu et de son identifiant de nœud, le nœud relais détermine les plages à utiliser pour émettre le message vers d'autres nœuds relais ou vers d'autres destinataires. Pour cela il va, par exemple, sélectionner une plage disponible au niveau des cellules codées et qui n'a pas été utilisée par un autre nœud, le numéro de plage p, (avec p=identifiant de noeud^{∗}nombre de directives de routage + numéro d'ordre du sous-réseau dans la directive de routage) pour émettre le message M sur le sous-réseau SR indiqué dans la directive de routage. Le nœud relais émet au maximum un nombre de cellules compris entre n et x en fonction des caractéristiques du sous-réseau SR. Le nœud relais arrête son émission dès que la somme des cellules reçues et émises sur le sous-réseau est égale au nombre de cellules compris entre n et x, nombre adapté au taux d'erreur du sous-réseau de transmission.

Pour disposer du nombre de cellules reçues par sous-réseau, le nœud relais est à l'écoute des émissions de message de la part des autres nœuds sur les sous-réseaux auxquels il est connecté.

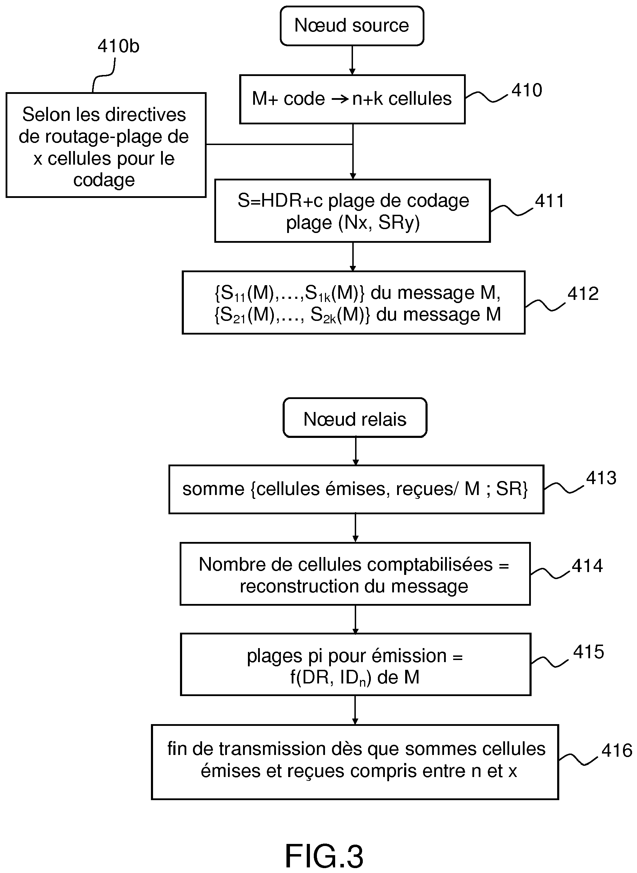

Le procédé de transmission d'un message M émis par un nœud source au sein d'un groupe G de nœuds raccordés chacun à un ou plusieurs sous-réseaux diffusants, en utilisant un ou plusieurs nœuds relais entre ces sous-réseaux comporte les étapes décrites ci-après et illustrée à la figure 3 :
Au niveau du nœud source
   - Le choix d'un codage et le codage des cellules du message M et des informations DR propres au routage, par le nœud source en utilisant un code algébrique adapté à générer n+k cellules, le nombre de cellules codées étant fonction des caractéristiques d'un sous-réseau SR qui va être utilisé pour transmettre les données du message, 410,
   - En fonction des directives de routage et de son identifiant IDn, le nœud source détermine les plages de x cellules à utiliser pour coder le message avant l'émission vers le ou les nœuds relais et vers le ou les nœuds destinataires, 410b,
   - le nœud source regroupe les cellules à transmettre en plusieurs segments S, un segment comporte un nombre m de cellules codées appartenant à la plage de codage plage(Nx,SRy). Le nœud source insère avant chaque segment un en-tête HDR comprenant au moins les informations suivantes : une information permettant de déduire l'index de chaque cellule contenue dans le segment, par exemple, le numéro i de la première cellule du segment, le nombre de cellules contenues dans le segment, un identifiant propre au message à transmettre et sa taille, 411,
   - émission d'au moins une première suite de segments {S₁₁(M), ..., S₁ₖ(M)} du message M via un premier chemin de transmission et d'une deuxième suite de segments {S₂₁(M) S₂ₗ(M)} du message M via un deuxième chemin de transmission, 412,
au niveau d'un nœud relais
   - le nœud relais comptabilise par message M et par sous-réseau SR les cellules d'index différents qu'il émet et qu'il reçoit des autres nœuds du sous-réseau, à partir de l'identifiant du message contenu dans l'en-tête segment, 413,
   - dès que le nœud relais dispose d'un nombre de cellules égal au nombre de cellules d'index différents, quel que soit la provenance (SR) des cellules, correspondant à la taille du message M, il reconstruit ce message, 414,
   - en fonction des directives de routage DR contenues dans le message M reconstruit et de son identifiant de nœud IDn, le nœud relais détermine les plages pi à utiliser pour recoder le message avant de l'émettre vers les autres nœuds relais ou vers les autres destinataires, et le nœud relais émet sur chaque sous-réseau SR un nombre maximum de cellules compris entre n et x en tenant compte des cellules qu'il a déjà reçues sur ce sous-réseau SR, 415,
   - le nœud relais arrête son émission sur le sous-réseau SR dès que le nombre des cellules d'index différents reçues et émises sur le sous-réseau SR permet de reconstituer le message depuis les autres nœuds du sous-réseau SR avec l'hypothèse d'une réception nominale, 416, telle qu'elle a été définie ci-avant.
Les nœuds destinataires appartenant au groupe G et qui ne sont pas nœuds relais se contentent de reconstituer le message à partir des segments reçus des sous-réseaux auxquels ils sont rattachés afin de livrer le message aux applications destinatrices.

Les exemples chiffrés qui suivent sont donnés à titre illustratif afin d'illustrer la mise en œuvre du procédé selon l'invention et illustrés par des tableaux sur les figures.

La figure 4 schématise une topologie de réseau qui va servir de base à différents exemples de réalisation. Le nœud N1 va émettre un message M(2 cellules) vers les nœuds destinataires N2, N3 et N5 appartenant au groupe G et le nœud source N1 aussi. Le nœud N4 n'est pas destinataire mais recevra lui aussi le message qu'il ne traitera pas. Une directive de routage indiquant que les sous-réseaux SR1 et SR2 sont utilisés pour transmettre le message, l'ensemble M+DR(SR1,SR2) = (3 cellules) contient trois cellules. Les nœuds appartenant au groupe G doivent disposer de trois cellules pour reconstituer le message M. Une cellule supplémentaire sera transmise à la fois sur SR1 et SR2 afin de compenser d'éventuelles pertes (ce qui représente un total de quatre cellules sur SR1 et SR2). Les cellules sont transmises par groupe de deux sur SR1 (segment contenant deux cellules) et unitairement sur SR2 (segment contenant une seule cellule).

Par exemple, un exemple de données chiffrées est le suivant :
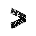 Taille Message = 20 octets,
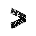 Directive de routage=SR1, SR2, le message sera transmis via les sous-réseaux SR1 et SR2, Taille Directive routage = 10 octets,
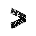 Nombre de cellules par segment : deux pour SR1, une pour SR2,
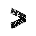 Taille cellule = 10 octets, quatre cellules Plage(SR1), quatre cellules Plage (SR2), x=4 cellules par plage,
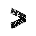 Plages utilisées pour le codage des cellules: p(N1,SR1)=1, p(N1,SR2)=2, p(N3,SR1)=5, p(N3,SR2)=6 ,p(N5,SR1)=9, p(N5,SR2)=10.

Un exemple de fonction d'allocation de plage est le suivant f(nœud, sous-réseau) = (N°nœud-1)^{∗}Nombre de sous réseaux de la directive de routage + position du sous réseau dans la directive de routage.

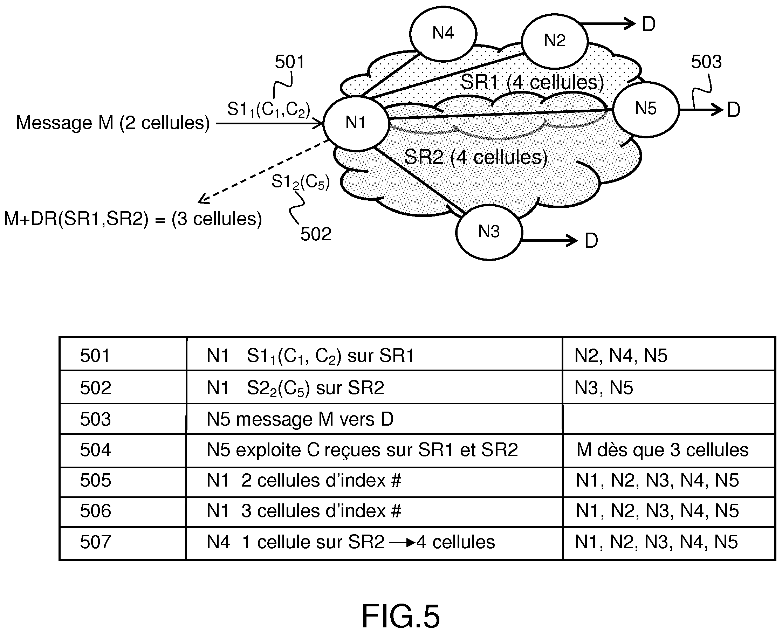

L'exemple qui suit, illustré à la figure 5, permet la diminution de la latence en multi-chemin. Un destinataire multi-raccordé profite des informations reçues de l'ensemble des sous-réseaux auxquels il est raccordé :
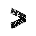 N1 émet le segment S1₁(C₁, C₂,) sur le sous-réseau SR1, les nœuds N2, N4, N5 reçoivent, 501,
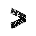 N1 émet le segment S1₂(C₅) sur le sous-réseau SR2, les nœuds N3, N5 reçoivent, 502,
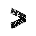 N5 restitue le message au destinataire (il a au moins trois cellules), 503,
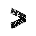 N5 exploite les cellules reçues via le sous-réseau SR1 et le sous-réseau SR2 et reconstitue le message dès qu'il comptabilise trois cellules (gain en latence), 504,
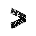 N1 émet encore deux cellules d'index différents de celles déjà émises sur le sous-réseau SR1, tous les nœuds reçoivent, 505,
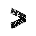 N1 émet encore trois cellules d'index différents de celles déjà émises sur le sous-réseau SR2, tous les nœuds reçoivent, 506,
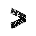 N4 émet une cellule sur le sous-réseau SR2 afin de totaliser quatre cellules sur le sous-réseau SR2, tous les nœuds reçoivent, 507.

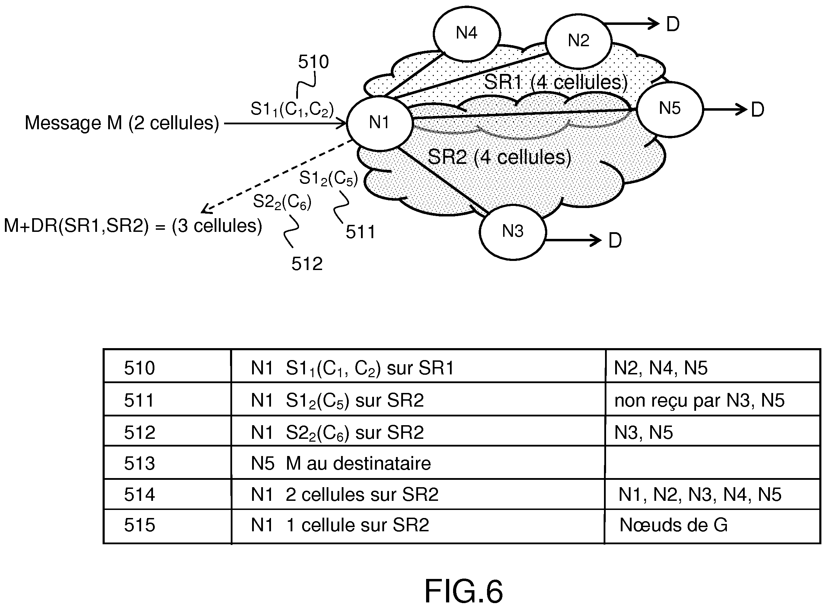

L'exemple suivant illustré à la figure 6 permet la compensation des pertes en multi-chemin. Les informations perdues via un sous-réseau sont compensées par celles reçues des autres sous réseaux :
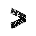 N1 émet le segment S1₁(C₁, C₂) sur le sous-réseau SR1, les nœuds N2, N4, N5 reçoivent, 510,
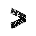 N1 émet le segment S1₂(C₅) sur le sous-réseau SR2, Le segment est perdu (non reçu par les nœuds N3, N5), 511,
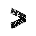 N1 émet S2₂(C₆) sur le sous-réseau SR2, les nœuds N3, N5 reçoivent, 512,
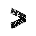 N5 restitue le message au destinataire (il a reçu au moins trois cellules),
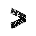 La perte de la cellule C5 sur le sous-réseau SR2 est compensée par les cellules reçues du sous-réseau SR1, (correction des pertes plus rapide),
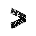 N1 émet encore deux cellules sur le sous-réseau SR1, tous les nœuds reçoivent, 513,
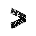 N1 émet encore deux cellules sur le sous-réseau SR2, tous les nœuds reçoivent, 514
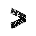 N5 émet une cellule sur le sous-réseau SR2 afin de totaliser quatre cellules sur le sous-réseau SR2, tous les nœuds du groupe G reçoivent, 515.

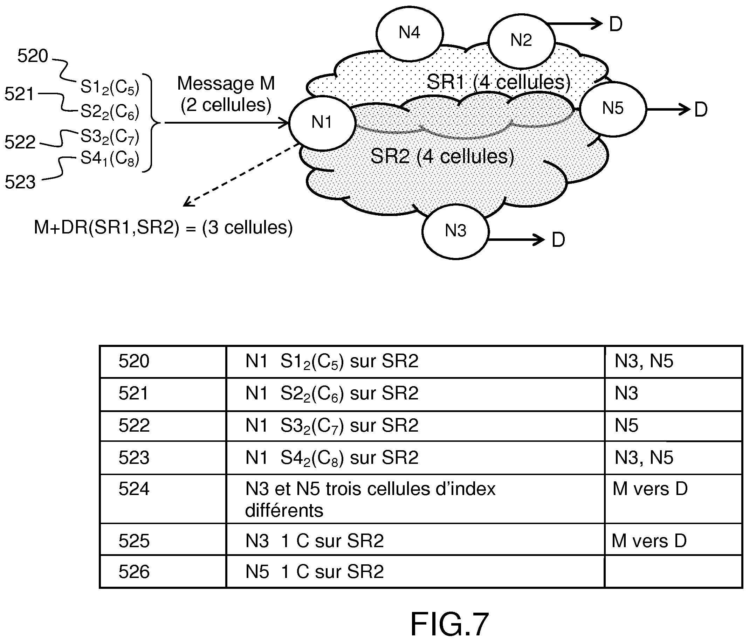

L'exemple de la figure 7 concerne la compensation de pertes différentes par une même information. Une seule information transmise peut compenser différentes pertes :
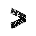 Les nœuds N2 et N4 ne sont pas accessibles, émission vers les nœuds N3, N5 sur le sous-réseau SR2 uniquement,
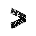 N1 émet le segment S1₂(C₅) sur le sous-réseau SR2, N3,N5, 520,
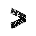 N1 émet le segment S2₂(C₆) sur le sous-réseau SR2, reçu par N3, 521,
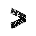 N1 émet le segment S3₂(C₇) sur le sous-réseau SR2, reçu par N5, 522,
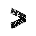 N1 émet le segment S4₂(C₈) sur le sous-réseau SR2, reçu par les nœuds N3, N5,523,
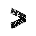 C8 compense la perte de la cellule C6 par le nœud N5 et de la cellule C7 par le nœud N3,
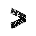 Les nœuds N3 et N5 totalisent trois cellules d'index différents et peuvent donc remettre le message au destinataire, 524,
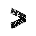 Le nœud N3 émet une cellule sur le sous-réseau SR2 afin de totaliser quatre cellules sur le sous-réseau SR2, elle est perdue, 525,
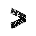 Le nœud N5 émet une cellule sur le sous-réseau SR2 afin de totaliser quatre cellules sur le sous-réseau SR2, elle est perdue, 526.

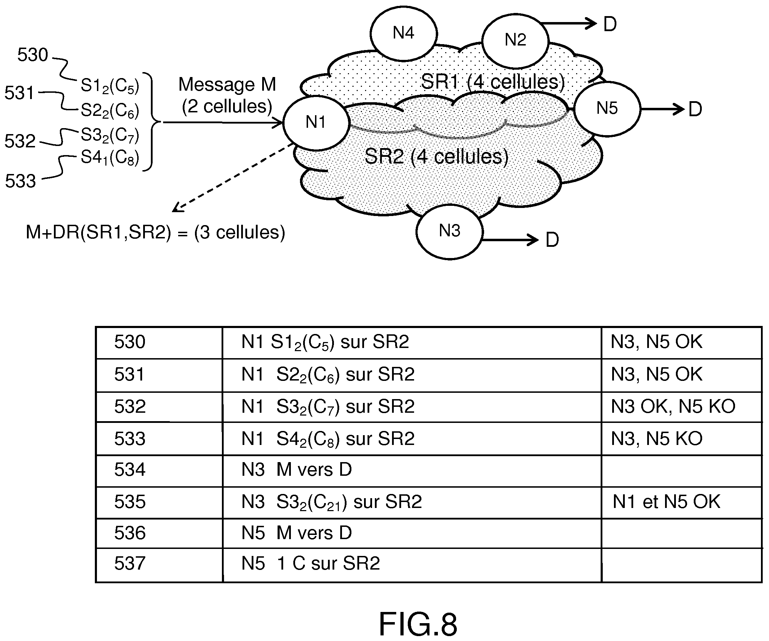

La topologie de la figure 3 permet aussi d'assurer une compensation progressive des pertes. Les pertes sont effacées de proche en proche dans un même sous réseau, comme illustré à la figure 8 :
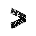 Les nœuds N2 et N4 ne sont pas accessibles, émission du message M vers les nœuds N3, N5 sur le sous-réseau SR2 uniquement,
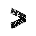 Le taux d'erreur du nœud N5 est plus important que celui du nœud N3,
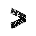 Le nœud N1 émet le segment S1₂(C₅) sur le sous-réseau SR2, N3, N5, 530,
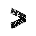 Le nœud N1 émet S2₂(C₆) sur SR2, N3, N5, 531,
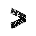 Le nœud N1 émet S3₂(C₇) sur SR2, N3 reçoit, pas N5, 532,
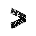 Le nœud N1 émet S4₂(C₈) sur SR2, N3, N5 ne reçoivent pas, 533,
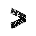 Le nœud N3 dispose de trois cellules, il reconstitue le message afin de le remettre au destinataire, 534
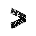 Le nœud N3 émet S3₂(C₂₁) sur SR2, N1 et N5 reçoivent, 535,
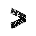 Le nœud N5 dispose de trois cellules, il peut reconstituer le message (grâce à N3) et remettre le message au destinataire, 536,
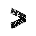 Le nœud N5 émet une cellule sur le sous-réseau SR2 afin de totaliser quatre cellules sur le sous-réseau SR2, 537.

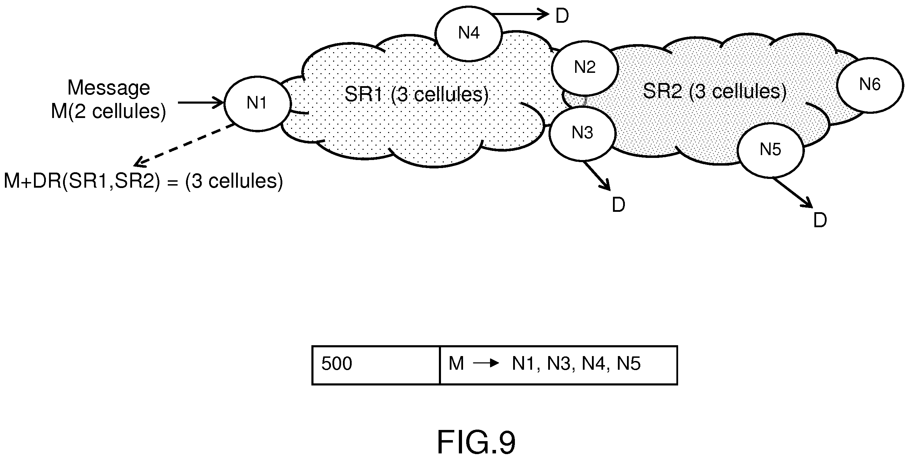

La figure 9 représente un deuxième exemple de topographie de réseau pour la mise en œuvre du procédé selon l'invention. Le message M est transmis par le nœud source N1 vers les nœuds N3, N4, N5 appartenant au même groupe G, 500 :
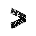 Taille Message = 20 octets,
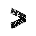 Directive de routage=SR1, SR2, Taille Directive routage = 10 octets,
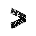 Nombre de cellules par segment : une pour SR1, une pour SR2,
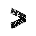 Taille cellule = 10 octets, 3 cellules Plage(SR1), 3 cellules Plage (SR2), x=3 cellules par plage,
> Plages : p(N1,SR1)=1, p(N1,SR2)=2, p(N2,SR1)=3, p(N2,SR2)=4, p(N3,SR1)=5, p(N3,SR2)=6, p(N4,SR1)=7, p(N4,SR2)=8, p(N5,SR1)=9, p(N5,SR2)=10, p(N6,SR1)=11, p(N6,SR2)=12.

Un exemple de fonction d'allocation de plage est la suivante f(noeud, sous-réseau) = (N°nœud-1)^{∗}Nombre de sous réseaux de la directive de routage + position du sous réseau dans la directive de routage.

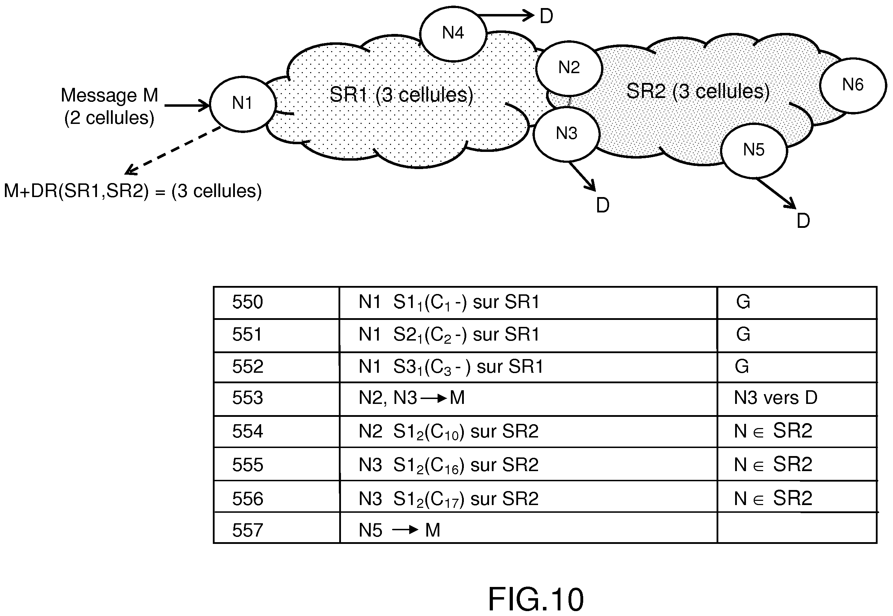

L'exemple de la figure 10 permet une diminution de latence en multi-chemin. Les capacités de transmission des deux relais peuvent être exploitées :
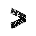 Le nœud N1 émet S1₁(C₁) sur SR1, tous les nœuds reçoivent, 550,
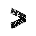 Le nœud N1 émet S2₁(C₂) sur SR1, tous les nœuds reçoivent, 551,
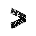 Le nœud N1 émet S3₁(C₃) sur SR1, tous les nœuds reçoivent, 552,
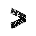 Les nœuds N2, N3 reconstituent le message, N3 le restitue à son destinataire (N2 non car pas dans le groupe), 553,
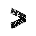 Le nœud N2 émet S1₂(C₁₀) sur SR2, tous les nœuds de SR2 reçoivent, 554,
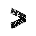 Le nœud N3 émet S1₂(C₁₆) sur SR2, tous les nœuds de SR2 reçoivent, 555,
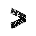 Le nœud N3 émet S2₂(C₁₇) sur SR2, tous les nœuds de SR2 reçoivent, 556,
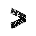 Le nœud N5 reconstitue le message, les capacités d'émission des deux relais ont été exploitées, 557.

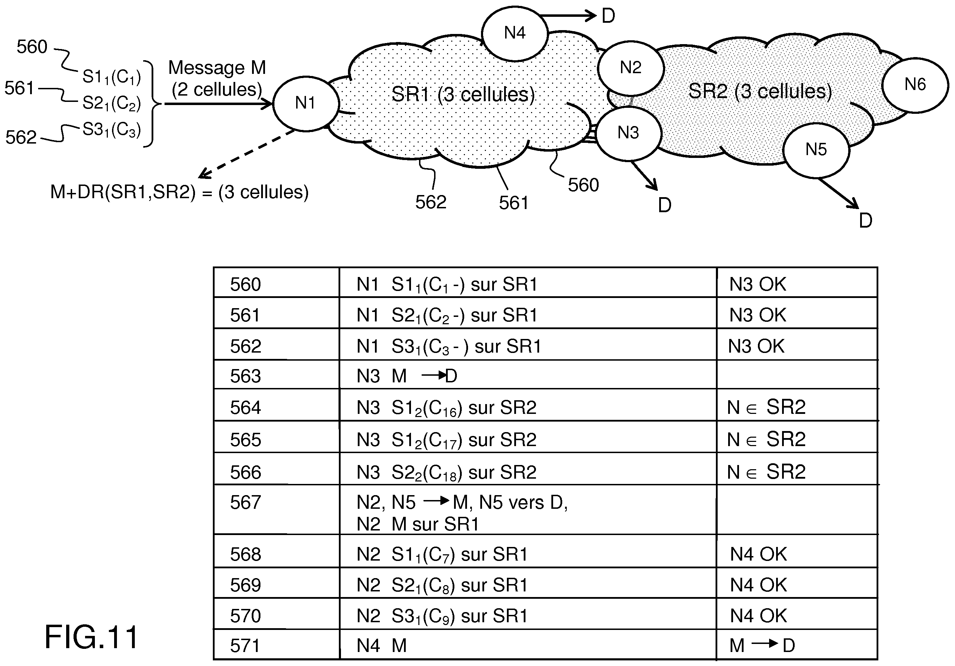

L'exemple qui suit, figure 11, permet la scission de réseaux radio/mobilité de nœuds. Le mécanisme reste efficace en cas de scission de réseaux :
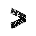 Deux partitions de SR1 sont constituées (N1, N3) et (N2, N4). Ils ne sont plus en portée radio,
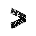 Le nœud N1 émet S1₁(C₁) sur SR1, seul N3 reçoit, 560,
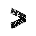 Le nœud N1 émet S2₁(C₂) sur SR1, seul N3 reçoit, 561,
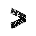 Le nœud N1 émet S3₁(C₃) sur SR1, seul N3 reçoit, 562,
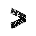 Le nœud N3 reconstitue le message et le restitue au destinataire, 563,
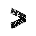 Le nœud N3 émet S1₂(C₁₆) sur SR2, tous les nœuds de SR2 reçoivent, 564,
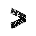 Le nœud N3 émet S1₂(C₁₇) sur SR2, tous les nœuds de SR2 reçoivent, 565,
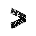 Le nœud N3 émet S2₂(C₁₈) sur SR2, tous les nœuds de SR2 reçoivent, 566,
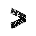 Les nœuds N2, N5 reconstituent le message, N5 le restitue au destinataire, N2 n'a encore reçu aucune information sur SR1, il transmet le message sur SR1, 567,
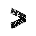 Le nœud N2 émet S1₁(C₇) sur SR1, seul N4 reçoit, 568,
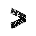 Le nœud N2 émet S2₁(C₈) sur SR1, seul N4 reçoit, 569,
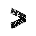 Le nœud N2 émet S3₁(C₉) sur SR1, seul N4 reçoit, 570,
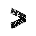 Le nœud N4 reconstitue le message et le restitue au destinataire, 571.

Le procédé selon l'invention s'applique également aux réseaux Internet avec protocole IP. Si SR1 est un réseau radio et SR2 un sous-réseau IP (non nécessairement radio), le mécanisme est appliqué de la façon suivante :
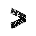 Sur le sous-réseau SR1 :
   - L'identifiant du sous réseau dans la directive de routage est un réseau radio,
   - Diffusion sur le réseau radio des segments (BROADCAST Radio),
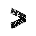 Sur le sous-réseau SR2 :
   - L'identifiant du sous réseau dans la directive de routage est un sous réseau IP,
   - Diffusion sur le réseau IP des segments en utilisant un groupe MULTICAST dédié à ce type d'acheminement (les récepteurs sont en écoute sur ce groupe MULTICAST).

Le procédé selon l'invention permet, notamment, d'assurer une transmission des messages avec une latence optimale du fait de l'utilisation de toutes les ressources disponibles en s'appuyant sur plusieurs réseaux et/ou plusieurs relais entre deux réseaux et en utilisant des cellules d'index différents et qui permettent d'éviter d'émettre des cellules de même index, doublons, qui ne permettent pas de reconstituer un message.

Le fait de ne pas émettre plusieurs fois la même cellule permet à un nœud récepteur du système de reconstruire le message initial avec n cellules, n correspondant à la taille initiale du message.

La taille du segment dépend notamment des caractéristiques des différents réseaux impliqués pour la transmission des données, radio, etc.

Le codage du message est basé sur un code fontaine commun à la source et à tous les relais garantissant l'indépendance linéaire de tous les segments résultants. Ce code garantit à n'importe quel récepteur appartenant à un groupe de reconstituer le message dès réception du nombre de cellules d'index différent suffisant à décoder le message.

L'algorithme de codage est un algorithme présentant notamment comme particularité de coder un message et de produire une suite de n+k cellules indexées de façon telle qu'à partir de n cellules d'index différent et quel que soit leur contenu, il est possible de reconstituer le message d'origine.

L'algorithme de codage est par exemple un code algébrique qui garantit de ne pas transmettre d'information répétée inutilement.

Les informations de contrôle sont réduites dans son mode de fonctionnement nominal à la directive de routage insérée dans le message réduite à liste des réseaux à emprunter et aux entêtes de segments. Des modes de fonctionnement avec acquittements comprendront des échanges d'informations de contrôle supplémentaires.

Le procédé selon l'invention peut être mis en œuvre dans un système de transmission radio utilisant des formes d'ondes VHF et UHF, avec pour l'UHF un fonctionnement intermittent. Il peut aussi être utilisé dans un système où la transmission UHF n'est pas disponible, le destinataire recevra alors le message via le sous-réseau VHF.

Le procédé et le système selon l'invention offrent notamment les avantages suivants :
- Une réduction de la latence de transmission,
- Un overhead limité (informations de contrôle),
- Une efficacité globale des ressources utilisées,
- Efficacité pour messages de petite taille ou taille importante.
- Une résilience, i.e, une robustesse vis-à-vis de pertes de données et de connectivité intermittentes.

## Revendications

1. Procédé pour transmettre un message M émis par un nœud source (1) vers au moins un nœud destinataire (3) au sein d'un groupe de nœuds raccordés chacun à un ou plusieurs sous-réseaux diffusants, lesdits nœuds communiquant via un protocole de routage et au moins un nœud relais (2) étant configuré pour recevoir les informations d'un sous-réseau et les relayer vers un autre sous-réseau, un message étant constitué de n cellules et comprenant des informations propres au routage, le procédé comprenant en combinaison au moins les étapes suivantes:
Au niveau du nœud source
• choix d'un codage des cellules du message M et des informations propres au routage, par le nœud source en utilisant un code fontaine adapté à générer n+k cellules, afin de constituer p plages de x cellules, avec x supérieur ou égal à n, une cellule étant repérée par un index dans le message (410),
• en fonction de directives de routage et de son identifiant IDn, le nœud source détermine les plages de x cellules à utiliser pour coder le message avant l'émission vers le ou les nœuds relais ou vers le ou les nœuds destinataires (3),
• le nœud source (1) regroupe les cellules à transmettre en plusieurs segments, un segment comporte un nombre Ns de cellules codées et le nœud source insère avant chaque segment un en-tête comprenant au moins les informations suivantes : une information permettant de déduire l'index de chaque cellule contenue dans le segment, un identifiant propre au message à transmettre et sa taille, (411),
• émission d'au moins une première suite de segments {S₁₁(M), ..., S₁ₖ(M)} du message M via un premier chemin de transmission et d'au moins une deuxième suite de segments {S₂₁(M), ..., S₂ₗ(M)} du message M via un deuxième chemin de transmission, (412),
Au niveau d'un nœud relais (2)
• le nœud relais comptabilise par message M et par sous-réseau SR les cellules d'index différents qu'il émet et qu'il reçoit des autres nœuds du sous-réseau, à partir de l'identifiant message contenu dans l'entête de segment, (413),
• dès que le nœud relais dispose d'un nombre de cellules d'index différents correspondant à la taille du message M, il reconstruit ce message, (414),
• en fonction des directives de routage contenues dans le message reconstruit et de son identifiant de nœud IDn, le nœud relais détermine les plages de x cellules à utiliser pour recoder le message avant l'émission vers les autres nœuds relais ou vers les autres nœuds destinataires, et émet sur chaque sous réseau un nombre maximum de cellules en tenant compte des cellules qu'il a déjà reçues sur ce sous réseau, (415),
• le nœud relais (2) arrête son émission sur le sous réseau SR dès que le nombre de cellules d'index différents reçues et émises sur le sous-réseau permet de reconstituer le message depuis les autres nœuds du sous réseau avec l'hypothèse d'une réception nominale, (416),
• les nœuds destinataires appartenant au groupe de nœuds raccordés et qui ne sont pas des nœuds relais reconstituent le message à partir de segments reçus des sous-réseaux auxquels ils sont attachés avant de délivrer le message.

2. Procédé selon la revendication 1 **caractérisé en ce que** le codage des cellules est un code algébrique.

3. Procédé selon l'une des revendications 1 ou 2 **caractérisé en ce que** le nombre de cellules est choisi en fonction des caractéristiques du sous-réseau de transmission du message.

4. Procédé selon la revendication 3 **caractérisé en ce que** le nombre de cellules à transmettre sur un sous réseau correspond au nombre adapté au taux d'erreur du sous-réseau de transmission.

5. Procédé selon l'une des revendications 1 à 4 **caractérisé en ce qu'**il utilise une fonction d'allocation de plage de cellules à émettre adaptée à allouer une plage différente à chaque couple (nœud, sous-réseau), les sous réseaux à considérer étant les sous réseaux de la directive de routage.

6. Procédé selon l'une des revendications 1 à 5 **caractérisé en ce que** le pilotage de la transmission des segments tient compte d'une information d'état de réception délivrée par les récepteurs.

7. Procédé selon l'une des revendications précédentes **caractérisé en ce que** la transmission des données est réalisée par transmission haute fréquence et/ou très haute fréquence et/ou tout réseau IP.

8. Système pour relayer un ou plusieurs messages au sein d'un réseau comprenant plusieurs nœuds communiquant entre eux au moyen d'un média diffusant, et appartenant à un groupe G composé d'un nœud source et de plusieurs nœuds du réseau, un message étant constitué de plusieurs cellules, une cellule étant repérée par un index entier représentant le numéro d'ordre de cette cellule produite par un code fontaine, comportant en combinaison au moins les éléments suivants :
• un nœud source (1) de message M à transmettre sur plusieurs chemins correspondant à au moins deux sous-réseaux, ledit nœud source comprenant au moins un émetteur (101), un processeur (102) adapté à exécuter les étapes du procédé au niveau du nœud source selon l'une des revendications 1 à 7, un algorithme de codage (103) des données du message M à transmettre,
• un ou plusieurs nœuds relais comprenant chacun, un émetteur (201), un récepteur (204), un algorithme de codage/décodage (203) du message M identique à l'algorithme de codage du nœud source, un compteur (205) des cellules contenues dans le message codé émises et reçues par chemin d'acheminement du message M (413), un processeur (202) adapté à exécuter les étapes du procédé au niveau du nœud relais selon l'une des revendications 1 à 7,
• un nœud destinataire (3) comprenant un récepteur (304) d'un message, un module d'algorithme de décodage (303) permettant de reconstituer le message, un émetteur (301) et un processeur (302) configuré pour reconstituer le message à partir des segments reçus des sous-réseaux auxquels ils sont rattachés, un compteur (305) pour comptabiliser les cellules émises et reçues par chemin d'acheminement du message M.

## Patentansprüche

1. Verfahren zum Übertragen einer Nachricht M, gesendet von einem Ausgangsknoten (1) zu wenigstens einem Zielknoten (3) innerhalb einer Gruppe von Knoten, die jeweils an einem oder mehreren Verteilungsteilnetzen angeschlossen sind, wobei die Knoten über ein Routing-Protokoll und wenigstens einen Relais-Knoten (2) kommunizieren, konfiguriert zum Empfangen der Informationen eines Teilnetzes und zum Weiterleiten derselben zu einem anderen Teilnetz, wobei eine Nachricht von n Zellen gebildet ist und Routing-spezifische Informationen umfasst, wobei das Verfahren in Kombination wenigstens die folgenden Schritte beinhaltet:
am Ausgangsknoten
• Wählen einer Codierung der Zellen der Nachricht M und von Routingspezifischen Informationen durch den Ausgangsknoten mit Hilfe eines Fontänencode, ausgelegt zum Erzeugen von n+k Zellen, um p Bereiche von x Zellen zu bilden, wobei x gleich oder größer als n ist, wobei eine Zelle durch einen Index in der Nachricht (410) identifiziert wird,
• Bestimmen, durch den Ausgangsknoten in Abhängigkeit von Routing-Anweisungen und seinem Identifikator Idn, der Bereiche von x Zellen, die zum Codieren der Nachricht vor dem Senden zu dem oder den Relais-Knoten oder zu dem oder den Zielknoten (3) zu benutzen sind,
• Gruppieren, durch den Ausgangsknoten (1), der zu übertragenden Zellen in mehrere Segmente, wobei ein Segment eine Anzahl Ns von codierten Zellen umfasst und der Ausgangsknoten vor jedem Segment einen Header einfügt, der wenigstens die folgenden Informationen umfasst: eine Information, die es zulässt, den Index jeder in dem Segment enthaltenen Zelle abzuleiten, einen für die zu übertragende Nachricht spezifischen Indikator und ihre Größe (411),
• Senden wenigstens eines ersten Satzes von Segmenten {S₁₁(M), ..., S₁ₖ(M)} der Nachricht M über einen ersten Übertragungskanal und wenigstens eines zweiten Satzes von Segmenten {S₂₁(M), ..., S₂ₗ(M)} der Nachricht M über einen zweiten Übertragungskanal (412),
an einem Relais-Knoten (2)
• Aufzeichnen, durch den Relais-Knoten, durch die Nachricht M und durch das Teilnetz SR, der verschiedenen Indexzellen, die er sendet und die er von anderen Knoten des Teilnetzes empfängt, auf der Basis der im Segment-Header (413) enthaltenen Nachrichtenidentifikation,
• Rekonstruieren der Nachricht (414) durch den Relais-Knoten, sobald er eine Anzahl von unterschiedlichen Indexzellen entsprechend der Größe der Nachricht M hat,
• Bestimmen durch den Relais-Knoten, in Abhängigkeit von den in der rekonstruierten Nachricht enthaltenen Routing-Anweisungen und ihrem Knoten-Identifikator IDn, der Bereiche von x Zellen, die zum Neucodieren der Nachricht zu benutzen sind, vor dem Senden zu den anderen Relais-Knoten oder zu den anderen Zielknoten, und Senden, auf jedem Teilnetz, einer maximalen Anzahl von Zellen unter Berücksichtigung der bereits auf diesem Teilnetz empfangenen Zellen (415),
• Stoppen des Sendens auf dem Teilnetz SR durch den Relais-Knoten (2), sobald es die Anzahl von unterschiedlichen auf dem Teilnetz empfangenen und gesendeten Indexzellen zulässt, die Nachricht von den anderen Knoten des Teilnetzes mit der Hypothese eines nominellen Empfangs zu rekonstituieren (416),
• Rekonstituieren, durch die zur Gruppe von angeschlossenen Knoten gehörenden Zielknoten, die keine Relais-Knoten sind, der Nachricht auf der Basis von von den Teilnetzen empfangenen Segmenten, an denen sie vor Lieferung der Nachricht anhängen.

2. Verfahren nach Anspruch 1, **dadurch gekennzeichnet, dass** die Codierung der Zellen ein algebraischer Code ist.

3. Verfahren nach Anspruch 1 oder 2, **dadurch gekennzeichnet, dass** die Anzahl von Zellen in Abhängigkeit von Charakteristiken des Teilnetzes zur Übertragung der Nachricht ausgewählt wird.

4. Verfahren nach Anspruch 3, **dadurch gekennzeichnet, dass** die Anzahl von auf einem Teilnetz zu übertragenden Zellen einer Anzahl entspricht, die an die Fehlerrate des Übertragungsteilnetzes angepasst ist.

5. Verfahren nach einem der Ansprüche 1 bis 4, **dadurch gekennzeichnet, dass** es eine Funktion des Zuordnens eines Bereichs von zu sendenden Zellen nutzt, ausgelegt zum Zuordnen eines anderen Bereichs zu jedem Paar (Knoten, Teilnetz), wobei die zu berücksichtigenden Teilnetze die Teilnetze der Routing-Anweisung sind.

6. Verfahren nach einem der Ansprüche 1 bis 5, **dadurch gekennzeichnet, dass** die Steuerung der Übertragung von Segmenten eine von den Empfängern gelieferte Empfangszustandsinformation berücksichtigt.

7. Verfahren nach einem der vorherigen Ansprüche, **dadurch gekennzeichnet, dass** die Übertragung von Daten durch Hochfrequenz- und/oder Ultrahochfrequenzübertragung und/oder Vollnetz-IP realisiert wird.

8. System zum Weiterleiten einer oder mehrerer Nachrichten innerhalb eines Netzwerks, das mehrere Knoten umfasst, die untereinander über ein Verteilungsmedium kommunizieren und zu einer Gruppe G gehören, bestehend aus einem Ausgangsknoten und mehreren Netzwerkknoten, wobei eine Nachricht aus mehreren Zellen gebildet ist, wobei eine Zelle durch einen Gesamtindex identifiziert wird, der die Ordnungszahl dieser Zelle repräsentiert, produziert durch einen Fontänencode, das in Kombination wenigstens die folgenden Elemente umfasst:
• einen Ausgangsknoten (1) der auf mehreren Kanälen zu übertragenden Nachricht M, entsprechend wenigstens zwei Teilnetzen, wobei der Ausgangsknoten wenigstens einen Sender (101), einen zum Ausführen der Schritte des Verfahrens am Ausgangsknoten nach einem der Ansprüche 1 bis 7 ausgelegten Prozessor (102), einen Algorithmus (103) zum Codieren der Daten der zu übertragenden Nachricht M umfasst,
• einen oder mehrere Relais-Knoten, jeweils umfassend einen Sender (201), einen Empfänger (204), einen Algorithmus (203) zum Codieren/Decodieren der Nachricht M, identisch mit dem Algorithmus zum Codieren des Ausgangsknotens, einen Zähler (205) für in der Nachricht enthaltene Zellen, die durch den Routingpfad der Nachricht M (413) gesendet und empfangen werden, einen Prozessor (202), ausgelegt zum Ausführen der Schritte des Verfahrens an dem Relais-Knoten nach einem der Ansprüche 1 bis 7,
• einen Zielknoten (3), umfassend einen Empfänger (304) einer Nachricht, ein Decodierungsalgorithmusmodul (303), das es zulässt, die Nachricht zu rekonstituieren, einen Sender (301) und einen Prozessor (302), konfiguriert zum Rekonstituieren der Nachricht auf der Basis der Segmente, die von Teilnetzen empfangen werden, an die sie angeschlossen sind, einen Zähler (305) zum Aufzeichnen der auf dem Routingpfad der Nachricht M gesendeten und empfangenen Zellen.

## Claims

1. Method for transmitting a message M sent by a source node (1) to at least one recipient node (3) within a group of nodes each linked to one or more broadcasting sub-networks, said nodes communicating via a routing protocol and at least one relay node (2) being configured to receive information from a sub-network and relaying them to another sub-network, a message consisting of n cells and comprising information specific to the routing, the method comprising in combination at least the following steps:
At the level of the source node
• choosing a coding of the cells of the message M and of the information specific to the routing, by the source node by using a fountain code adapted for generating n+k cells, so as to constitute p ranges of x cells, with x greater than or equal to n, a cell being tagged by an index in the message (410),
• as a function of routing directives and of its identifier IDn, the source node determines the ranges of x cells to be used to code the message before the sending to the relay node or nodes or to the recipient node or nodes (3),
• the source node (1) groups together the cells to be transmitted into several segments, a segment comprises a number Ns of coded cells and the source node inserts before each segment a header comprising at least the following information: an item of information making it possible to deduce the index of each cell contained in the segment, an identifier specific to the message to be transmitted and its size, (411),
• sending at least one first string of segments {S₁₁(M),..., S₁ₖ(M)} of the message M via a first transmission path and at least one second string of segments {S₂₁(M), ..., S₂ₗ(M)} of the message M via a second transmission path, (412),
At the level of a relay node (2)
• the relay node keeps count per message M and per sub-network SR of the cells of different indices that it sends and that it receives from the other nodes of the sub-network, on the basis of the message identifier contained in the segment header, (413),
• as soon as the relay node has at its disposal a number of cells of different indices corresponding to the size of the message M, it reconstructs this message, (414),
• as a function of the routing directives contained in the reconstructed message and of its node identifier IDn, the relay node determines the ranges of x cells to be used to recode the message before the sending to the other relay nodes or to the other recipient nodes, and sends on each sub-network a maximum number of cells while taking account of the cells that it has already received on this sub-network, (415),
• the relay node (2) stops its sending on the sub-network SR as soon as the number of cells of different indices received and sent on the sub-network makes it possible to reconstruct the message from the other nodes of the sub-network under the assumption of nominal reception, (416),
• the recipient nodes belonging to the group of linked nodes and which are not relay nodes reconstruct the message on the basis of segments received from the sub-networks to which they are attached before delivering the message.

2. Method according to Claim 1, **characterized in that** the algorithm for coding the cells is an algebraic code.

3. Method according to one of Claims 1 or 2, **characterized in that** the number of cells is chosen as a function of the characteristics of the sub-network for transmitting the message.

4. Method according to Claim 3, **characterized in that** the number of cells to be transmitted on a sub-network corresponds to the number adapted for the error rate of the transmission sub-network.

5. Method according to one of Claims 1 to 4, **characterized in that** it uses a function for allocating range of cells to be sent which is adapted for allocating a different range to each (node, sub-network) pair, the sub-networks to be considered being the sub-networks of the routing directive.

6. Method according to one of Claims 1 to 5, **characterized in that** the controlling of the transmission of the segments takes account of a reception state item of information delivered by the receivers.

7. Method according to one of the preceding claims, **characterized in that** the transmission of the data is carried out by high-frequency transmission and/or very-high-frequency transmission and/or all IP network transmission.

8. System for relaying one or more messages within a network comprising several nodes communicating with one another by means of a broadcasting medium, and belonging to a group G, consisting of a source node and several network nodes, a message consisting of several cells, a cell being tagged by an integer index representing the order number of this cell produced by a fountain code, comprising in combination at least the following elements:
• a source node (1) of message M to be transmitted on several paths corresponding to at least two sub-networks, the said source node comprising at least one sender (101), one processor (102) adapted for executing the steps of the method at the level of the source node according to any of the claims 1 to 7, a coding algorithm (103) for the data of the message M to be transmitted,
• one or more relay nodes each comprising a sender (201), a receiver (204), a coding/decoding algorithm (203) for the message M identical to the algorithm for coding the source node, a counter (205) of the cells contained in the coded message that are sent and received per forwarding path of the message M (413), a processor (202) adapted for executing the steps of the method at the level of the relay node according to one of claims 1 to 7,
• a recipient node (3) comprising a receiver (304) of a message, a decoding algorithm module (303) making it possible to reconstruct the message, a sender (301) and a processor (302) adapted for reconstructing the message on the basis of segments received from the sub-networks to which they are attached, a counter (305) for counting the cells sent and received per forwarding path of the message M.
